# EUROPÄISCHE PATENTANMELDUNG

(11) **EP 1 394 510 A1**
(43) Veröffentlichungstag der Anmeldung: **03.03.2004**
(21) Anmeldenummer: 03013303.7
(22) Anmeldetag: 12.06.2003
(51) Int. Cl.: G01C 21/32, G08G 1/0969, G06T 17/50, G09B 29/10

(54) **Verfahren zum Ermitteln von Kartendaten**

(30) Priorität: 28.08.2002 DE 10239440
(71) Anmelder: ROBERT BOSCH GMBH, 70442 Stuttgart (DE)
(72) Erfinder: Braun, Arnd, 31141 Hildesheim (DE); Otte, Dirk, 30880 Laatzen (DE)

(57) **Zusammenfassung**

Um ein insbesondere für mindestens eine Anzeigeeinrichtung eines einem Fortbewegungsmittel zugeordneten Informationssystems vorgesehenes Verfahren zum Ermitteln von insbesondere digitalen Kartendaten, durch die mittels einer Folge von Eckpunkten (P1, ..., Pm bzw. Q1, ..., Qn) mindestens ein zweidimensionales Kartengebilde (10 bzw. 12), wie etwa mindestens eine zweidimensionale Fläche (10) und/oder mindestens eine zweidimensionale Strecke (12), gebildet wird, so weiterzuentwickeln, daß die Daten für die Karte auf einfache sowie zügige Weise ermittelbar und in mehreren Maßstäben auf üblichen Datenträgern, wie etwa auf einer C[ompact]D[isc] oder auf einer D[igital]V[ersatile]D[isc], speicherbar sind, werden zumindest folgende Verfahrensschritte vorgeschlagen:
[a] Einteilen der Kartendaten mittels mindestens eines virtuelle Rasterelemente (22) definierter Größe aufweisenden Rasters (20);
[b] Projizieren bzw. Verschieben eines jeden Eckpunkts (P1, ..., Pm bzw. Q1, ..., Qn) auf einen bestimmten Punkt (Mi), insbesondere auf den Mittelpunkt, des dem jeweiligen Eckpunkt (Pi bzw. Qi) zugeordneten Rasterelements (22);
[c] Löschen eines betrachteten Eckpunkts (Pi bzw. Qi), wenn dieser Eckpunkt (Pi bzw. Qi) auf der Verbindungsgerade zwischen dem dem betrachteten Eckpunkt (Pi bzw. Qi) vorhergehenden Eckpunkt (Pi-1 bzw. Qi-1) und dem dem betrachteten Eckpunkt (Pi bzw. Qi) nachfolgenden Eckpunkt (Pi+1 bzw. Qi+1) liegt.

## Beschreibung

### Technisches Gebiet

Die vorliegende Erfindung betrifft ein insbesondere für mindestens eine Anzeigeeinrichtung eines einem Fortbewegungsmittel zugeordneten Informationssystems vorgesehenes Verfahren zum Ermitteln von insbesondere digitalen Kartendaten, durch die mittels einer Folge von Eckpunkten mindestens ein zweidimensionales Kartengebilde, wie etwa mindestens eine zweidimensionale Fläche und/oder mindestens eine zweidimensionale Strecke, gebildet wird.

### Stand der Technik

Bei Informationssystemen für Führer von Fortbewegungsmitteln, insbesondere von Kraftfahrzeugen, werden die Informationen akustisch und/oder optisch durch Symbole dargeboten. Die zusätzliche Darstellung einer Straßenkarte auf einer Anzeigeeinrichtung oder auf einem Display ist hierbei eine wichtige Hilfe für den Führer des Fortbewegungsmittels oder für dessen Beifahrer und stellt demzufolge ein durchaus relevantes Kaufkriterium dar.

Neben Straßenlinien werden auf dieser Karte auch Flächen, wie etwa Bebauungsflächen, Gewässer, Parks oder dergleichen, andere Linien, wie etwa Eisenbahnen, Grenzen oder dergleichen, sowie markante Punkte (= sogenannte P[oints]O[f]l[nterest]), wie etwa Ortszentren, Tankstellen oder dergleichen, in dieser Karte dargestellt. Um diese Karte während der Fahrt des Fortbewegungsmittels auf möglichst einfache und schnelle Weise ständig neu zeichnen zu können, ist es erforderlich, die darzustellenden Daten aufzubereiten und in ein spezielles Format zu konvertieren.

Im Detail bedeutet dies, daß dem Führer des Fortbewegungsmittels auf der Anzeigeeinrichtung des Informationssystems, insbesondere des Navigationssystems, verschiedene Informationen in Teilbereichen dieser Anzeigeeinrichtung angezeigt werden. Hierbei kann zum Beispiel die Straßenkarte mit einem Umgebungsbereich der aktuellen Position des Fortbewegungsmittels zusammen mit Informationen über die Umgebung angezeigt werden.

Die Informationen über die Umgebung des Fortbewegungsmittels werden auf der Anzeigeeinrichtung in der Regel
- durch verschiedenfarbige Flächen zur Unterscheidung zum Beispiel der Bebauungsflächen, der Gewässer und der Parks,
- durch verschiedenfarbige Linien zur Darstellung zum Beispiel der Eisenbahntrassen und der Grenzen sowie
- durch markante Punkte zur Darstellung zum Beispiel der Ortszentren und der Tankstellen
wiedergegeben.

Die Kartendaten zur Darstellung der Flächen bzw. der Kartenbereiche werden in der Regel durch einen geschlossenen Randlinienzug aus Randlinienstrecken beschrieben. Der Randlinienzug wird hierbei als Folge von Eckpunkten beschrieben, zwischen denen die Randlinienstrecken ausgebildet sind. Diese Folgen von Eckpunkten sind auf einem lokalen Datenträger gespeichert oder werden mittels D[aten]F[ern]Ü[bertragung] angefordert.

Wie bereits vorstehend angedeutet, sind die Darstellungen auf der Karte während der Fahrt des Fortbewegungsmittels ständig zu aktualisieren und somit neu zu zeichnen. Hierzu werden die relevanten Kartendaten aufgerufen und mit der im Fortbewegungsmittel dafür vorgesehenen Recheneinrichtung durch Koordinatentransformation in für die Anzeigeeinrichtung geeignete Kartenbereiche konvertiert.

Um eine schnelle Aufbereitung der Kartendaten im geeigneten Anzeigeformat zu ermöglichen, werden die Kartendaten geographischer Bereiche im allgemeinen in verschiedenen Maßstäben gespeichert. Zu diesem Zwecke müssen aus den zum Beispiel durch geographische Vermessung oder durch Einscannen älteren Kartenmaterials gewonnenen Daten geeignete Kartendaten für die Darstellung auf der Anzeigeeinrichtung gewonnen werden.

Derartige Kartendaten sind oftmals sehr umfangreich, denn die darzustellenden Kartenbereiche bzw. -flächen sind sehr komplex und demzufolge sind die Koordinaten vieler Eckpunkte zu speichern, auch wenn die Komplexität der Fläche im jeweiligen Maßstab auf der Anzeigeeinrichtung nicht wiedergegeben werden kann.

Beim Konvertieren während der Fahrt des Fortbewegungsmittels werden zunächst die Eckpunkte des gespeicherten Kartenbereichs durch Koordinatentransformation in Eckpunkte des anzuzeigenden Kartenbereichs transformiert. Anschließend werden von einem Füllpunkt innerhalb der Randlinie ausgehend die weiteren Bildpunkte des Kartenbereichs bis zur Randlinie ermittelt und mit der Flächenfarbe aufgefüllt.

Eine geeignete Position eines Füllpunkts innerhalb der Randlinie ist jedoch zunächst unbekannt und kann nicht unmittelbar aus der gespeicherten Folge von Eckpunkten erkannt werden. Der Füllpunkt sollte einen gewissen Mindestabstand zum Rand der Fläche bzw. des Kartenbereichs haben, denn beim Konvertieren der gespeicherten Kartendaten wird eine Koordinatentransformation, insbesondere eine Drehung, eventuell auch eine Streckung und/oder eine Translation, vorgenommen, bei der verschiedene Bildpunkte des Kartenbereichs auf einen Bildpunkt des Anzeigekartenbereichs abgebildet werden können.

Wird in den Kartendaten ein Eingangsfüllpunkt gespeichert, der innerhalb der Randlinie des Kartenbereichs liegt, so kann dieser Eingangsfüllpunkt beim Konvertieren bzw. Transformieren eventuell auf einen gleichen Bildpunkt wie ein Randpunkt der Randlinie abgebildet werden. In diesem Falle führt das nachfolgende Auffüllverfahren zur Ausbildung des farbigen Anzeigekartenbereichs jedoch dazu, daß von der Randlinie ausgehend der gesamte Bildschirm mit der einheitlichen Farbe ausgefüllt wird und somit ein fehlerhaftes Bild dargestellt wird.

Ein Ermitteln eines geeigneten Füllpunkts ist jedoch insbesondere bei komplexen, verwinkelten Flächen aufwendig, so daß oftmals in den gespeicherten Kartendaten zusätzlich zur Folge von Eckpunkten geeignete Eingangsfüllpunkte gespeichert werden, wodurch die gespeicherte Datenmenge jedoch deutlich erhöht wird.

Da zum Speichern der vielen Eckpunkte und gegebenenfalls der Eingangsfüllpunkte ein erheblicher Speicherplatz erforderlich ist, ist die Speicherung größerer geographischer Bereiche in mehreren Maßstäben auf üblichen Datenträgern, wie etwa auf einer C[ompact]D[isc] oder auf einer D[igital]V[ersatile]D[isc], problematisch.

Weiterhin kann das durchzuführende Rechenverfahren insbesondere bei komplexen, verwinkelten Flächen aufgrund der begrenzten Rechenkapazität der im Fortbewegungsmittel vorhandenen Recheneinrichtung eine längere Zeitdauer in Anspruch nehmen, was vom Führer des Fortbewegungsmittels als störend empfunden wird und was eine flüssige sowie genaue Anzeige der jeweiligen Fahrposition und -umgebung verhindert.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art so weiterzuentwickeln, daß die Daten für die Karte auf einfache sowie zügige Weise ermittelbar und in mehreren Maßstäben auf üblichen Datenträgern, wie etwa auf einer C[ompact]D[isc] oder auf einer D[igital]V[ersatile]D[isc], speicherbar sind.

Diese Aufgabe wird gemäß der Lehre der vorliegenden Erfindung durch ein Verfahren mit den im Anspruch 1 genannten Merkmalen gelöst. Vorteilhafte Ausgestaltungen und zweckmäßige Weiterbildungen der vorliegenden Erfindung sind in den Unteransprüchen gekennzeichnet.

Mithin ist der Kern der vorliegenden Erfindung in der Möglichkeit zu sehen, beim Aufbereiten von insbesondere digitalen Kartendaten für Fahrer-Informationssysteme ein Generalisierungsverfahren einzusetzen, mittels dessen unter Einsatz mindestens eines Rasters eine Reduktion der digitalen Kartendaten, nämlich der Anzahl der Eckpunkte vorgenommen wird.

In diesem Zusammenhang beruht die vorliegende Erfindung darauf, daß jedes darzustellende zweidimensionale Kartengebilde, wie etwa jede zweidimensionale Fläche und/oder jede zweidimensionale Linie bzw. Strecke, durch mindestens eine geordnete Liste ihrer jeweiligen Eckpunkte beschrieben wird. Die vorliegende Erfindung lehrt hierbei, nichtrelevante Eckpunkte dieser zweidimensionalen Kartengebilde wegzulassen.

Für ein erfolgreiches Ergebnis des vorliegenden Verfahrens letztendlich entscheidend ist, daß durch das Reduzieren der vorzugsweise auf mindestens einem Datenträger, zum Beispiel auf mindestens einer C[ompact]D[isc] oder auf mindestens einer D[igital]V[ersatile]D[isc], zu speichernden Kartendaten die Daten eines wesentlich größeren Gebiets gespeichert werden können, als wenn keine Reduktion der Daten für die Karte vorgenommen würde. In diesem Zusammenhang erfolgt die Reduktion der Kartendaten, indem einfachere, eine geringere Anzahl von Eckpunkten aufweisende Kartengebilde (Flächen, Linien, Strecken, ...) generiert werden.

Hierdurch unterscheidet sich die vorliegende Erfindung von der gemäß dem Stand der Technik beschriebenen Vorgehensweise, zum "Generalisieren von Flächen" eben diese Flächen in Teilflächen aufzuteilen und auf diese Art die nicht-relevanten Teilflächen zu löschen; bei dieser bekannten Vorgehensweise wird der Flächeninhalt der Gesamtfläche nicht verändert, das heißt die Summe der abgetrennten Teilflächen bleibt genau so groß wie die Originalfläche vor dem Generalisieren.

Der Fachmann auf dem vorliegenden technischen Gebiet wird insbesondere zu schätzen wissen, daß sich durch das Weglassen von nicht-relevanten Eckpunkten bei der vorliegenden Erfindung die Zeichnungsgeschwindigkeit deutlich erhöht; ein Weniger an Eckpunkten bedeutet auch, daß auf dem Datenträger in vorteilhafter Weise mehr Platz für andere Informationen zur Verfügung steht und daß im Fahrer-Informationssystem weniger Arbeitsspeicher für die Eckpunkte benötigt wird.

Im Detail wird bei der vorliegenden Erfindung also zunächst für jedes zweidimensionale Kartengebilde (= zum Beispiel für jede zweidimensionale Fläche und/oder für jede zweidimensionale Linie oder Strecke), das durch eine Folge von mindestens zwei Eckpunkten definiert ist, in einem Verfahrensschritt [a] mindestens ein (virtuelles) Raster über die Kartendaten gelegt; dieses Raster ist vorzugsweise als mindestens ein virtuelles Gitter ausgebildet, das als virtuelle Rasterelemente Kacheln definierter Größe, zum Beispiel rechteckige Kacheln oder quadratische Kacheln, aufweist.

Im nächsten Verfahrensschritt [b] wird jeder Eckpunkt auf einen bestimmten Punkt, insbesondere auf den Mittelpunkt, des dem jeweiligen Eckpunkt zugeordneten Rasterelements projiziert bzw. verschoben. Die weitere Vorgehensweise im Verfahren hängt nun davon ab, ob der im Rahmen des Verfahrensschritts [b] projizierte bzw. verschobene betrachtete Eckpunkt ein bestimmtes Kriterium erfüllt:

Wenn dieser betrachtete Eckpunkt auf der Verbindungsgerade zwischen dem dem betrachteten Eckpunkt vorhergehenden Eckpunkt und dem dem betrachteten Eckpunkt nachfolgenden Eckpunkt liegt, so wird der betrachtete Eckpunkt in einem Verfahrensschritt [c] gelöscht, und zwar insbesondere aus mindestens einer geordneten Liste der Eckpunkte des Kartenbereichs; hierdurch erfolgt sukzessive die erfindungsgemäß angestrebte Reduzierung der Anzahl der Eckpunkte.

Die durch das Löschen des betrachteten Eckpunkts entstandene "Lücke" wird gemäß einer besonders vorteilhaften Weiterbildung des vorliegenden Verfahrens geschlossen, indem der dem gelöschten Eckpunkt vorhergehende Eckpunkt mit dem dem gelöschten Eckpunkt nachfolgenden Eckpunkt verbunden wird. Auf diese Weise entsteht wiederum eine Abfolge von Eckpunkten, durch die
- das nunmehr etwas größere, weil um den betrachteten Eckpunkt bereinigte Kartengebilde oder
- das nunmehr etwas kleinere, weil um den betrachteten Eckpunkt bereinigte Kartengebilde
definiert wird.

In zweckmäßiger Weise können vor dem Verfahrensschritt [c]
- mehrere aufeinanderfolgende Eckpunkte auf denselben bestimmten Punkt, insbesondere auf denselben Mittelpunkt, des diesen mehreren aufeinanderfolgenden Eckpunkten zugeordneten Rasterelements projiziert bzw. verschoben und
- diese projizierten bzw. verschobenen Eckpunkte durch diesen bestimmten Punkt, insbesondere durch diesen Mittelpunkt, ersetzt
werden.

Gemäß einer vorteilhaften Weiterbildung der vorliegenden Erfindung erfolgt während der Fahrt des Fortbewegungsmittels im Fahrerinformationssystem ständig ein Transformieren der Koordinaten der Eckpunkte auf Koordinaten des Bildschirms oder Monitors des Fahrerlnformationssystems. Hierbei können auch mehrere benachbarte Eckpunkt-Koordinaten auf eine Bildschirm-Koordinate fallen, das heißt benachbarte Eckpunkte werden schon während der Datenaufbereitung zu einem Eckpunkt zusammengefaßt.

Die ermittelte Folge von Eckpunkten kann in bevorzugter Weise in einem nachfolgendem Verfahrensschritt [d] als Unterfolge in mindestens einer Kartenspeichereinheit abgespeichert werden.

Gemäß einer besonders vorteilhaften Weiterbildung des vorliegenden Verfahrens kann nach Löschen des betrachteten Eckpunkts erforderlichenfalls der Verfahrensschritt [c]
- für den dem gelöschten Eckpunkt vorhergehenden Eckpunkt und/oder
- für den dem gelöschten Eckpunkt nachfolgenden Eckpunkt durchgeführt werden.

Wenn diese optionale Vorgehensweise in zweckmäßiger Form noch verallgemeinert werden soll, so bietet es sich an, gegebenenfalls den Verfahrensschritt [c] für jeden Eckpunkt des Kartenbereichs durchzuführen, und zwar insbesondere iterativ und/oder insbesondere nacheinander; der Verfahrensschritt [c] kann so oft iteriert wird, bis kein betrachteter Eckpunkt mehr auf der Verbindungsgerade zwischen dem dem betrachteten Eckpunkt vorhergehenden Eckpunkt und dem dem betrachteten Eckpunkt nachfolgenden Eckpunkt liegt.

Zusammenfassend ist der Kern der vorliegenden Erfindung mithin in der Bereitstellung einer kostengünstigen Systemlösung zu sehen, bei der Kartendaten ermittelt werden, die ein Speichern ausgedehnter geographischer Bereiche in mehreren Maßstäben mit relativ geringem Speicheraufwand ermöglichen und die weiterhin ein schnelles sowie sicheres Ermitteln der aktuellen Anzeigedaten für eine Anzeigeeinrichtung gewährleisten.

Durch das schnelle Ermitteln der Anzeigedaten wird eine fließende Darstellung der sich ändernden Anzeigekartenbereiche während einer Fahrt des Fortbewegungsmittels ermöglicht, die vom Benutzer als angenehm, instruktiv und leicht ablesbar empfunden wird.

Die vorliegende Erfindung betrifft des weiteren ein einem Fortbewegungsmittel zugeordnetes Informationssystem, insbesondere Navigationssystem, arbeitend gemäß einem Verfahren gemäß der vorstehend dargelegten Art.

Die vorliegende Erfindung betrifft schließlich die Verwendung eines Verfahrens gemäß der vorstehend dargelegten Art und/oder mindestens eines einem Fortbewegungsmittel zugeordneten Informationssystems gemäß der vorstehend dargelegten Art in mindestens einer Navigationseinrichtung.

Das vorliegende Verfahren kann also während der Aufbereitung der Daten für Fahrer-Informationssysteme und hierbei insbesondere für Navigationssysteme eingesetzt werden. Die Rohdaten sind sehr detailliert und werden für die unterschiedlichen Darstellungsmaßstäbe im Fahrerinformationssystem unterschiedlich stark generalisiert und damit auch vereinfacht.

Die hier beschriebene Generalisierungsmethode basiert auf dem Weglassen von nicht-relevanten Flächeneckpunkten. Dieses Verfahren kann insbesondere auch während der Fahrt des Fortbewegungsmittels angewendet werden, sofern die im Fahrer-Informationssystem verfügbare Prozessoreinheit eine entsprechende Performance aufweist.

Durch das Weglassen der nicht-relevanten Flächeneckpunkte erhöht sich nicht nur die Geschwindigkeit beim Zeichnen des zweidimensionalen Kartenbereichs, zusätzlich wird auch noch der im Fortbewegungsmittel benötigte Arbeitsspeicher reduziert, in den zum Zeichnen alle Eckpunkte gleichzeitig geladen werden müssen.

Das Einsparen des erforderlichen Arbeitsspeichers wiederum bedeutet, daß dieser Arbeitsspeicher für andere Aufgaben zur Verfügung steht oder ganz weggelassen werden kann. In diesem Zusammenhang können die notwendigen mathematischen Prozesse ganz durch eine hardwaremäßig implementierte Recheneinrichtung bzw. Bordrecheneinrichtung ausgeführt werden.

### Kurze Beschreibung der Zeichnungen

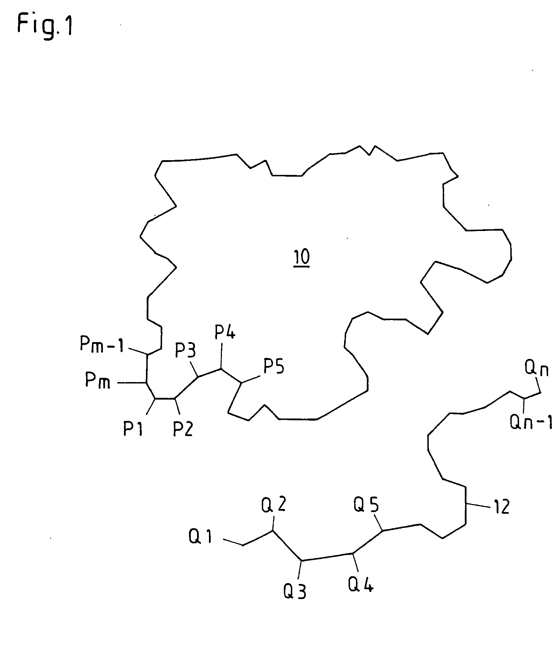

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend anhand des durch die Figuren 1 bis 6 veranschaulichten Ausführungsbeispiels näher erläutert.

Es zeigt:
- Fig. 1: in schematischer Darstellung als Fläche bzw. als Strecke ausgebildete und mit Eckpunkten versehene zweidimensionale Kartengebilde vor dem Generalisieren;
- Fig. 2: in schematischer Darstellung die beiden Kartengebilde aus Fig. 1 nach dem ersten Generalisierungsschritt mittels des Verfahrens gemäß der vorliegenden Erfindung;
- Fig. 3: in schematischer Darstellung die beiden Kartengebilde aus Fig. 2 nach dem zweiten Generalisierungsschritt mittels des Verfahrens gemäß der vorliegenden Erfindung;
- Fig. 4: in schematischer Darstellung die beiden Kartengebilde aus Fig. 3 nach dem zweiten Generalisierungsschritt mittels des Verfahrens gemäß der vorliegenden Erfindung;
- Fig. 5: in schematischer Darstellung die beiden noch mit einem Raster versehenen Kartengebilde aus Fig. 4 nach dem Generalisieren mittels des Verfahrens gemäß der vorliegenden Erfindung; und
- Fig. 6: in schematischer Darstellung die beiden Kartengebilde aus Fig. 5 nach dem Generalisieren mittels des Verfahrens gemäß der vorliegenden Erfindung, nunmehr wieder ohne das Raster.

Gleiche oder ähnliche Ausgestaltungen, Elemente oder Merkmale sind in den Figuren 1 bis 6 mit identischen Bezugszeichen versehen.

### Bester Weg zur Ausführung der Erfindung

Das anhand der Figuren 1 bis 6 vorgestellte Verfahren zur Datenreduktion bei der Aufbereitung von digitalen Kartendaten dient grundsätzlich zum Ermitteln von Kartendaten für eine Anzeigeeinrichtung eines einem Kraftfahrzeug zugeordneten Informationssystems; bei diesem Informationssystem handelt es sich um ein Navigationssystem.

In der Darstellung gemäß Figur 1 sind zwei zweidimensionale Kartengebilde 10, 12, nämlich eine zweidimensionale Fläche 10 und eine zweidimensionale Strecke 12, jeweils durch eine Folge von vielen Eckpunkten P1, ..., Pm bzw. Q1, ..., Qn gebildet (bei der Fläche 10 sind die Eckpunkte P1, ..., Pm vorzugsweise im mathematisch positiven Sinne, das heißt entgegen dem Uhrzeigersinn orientiert, so daß der Kartenbereich 10 beim Entlangfahren auf der Randlinie von Eckpunkt Pi zu Eckpunkt Pi+1 stets links von der Randlinie liegt; grundsätzlich kann das Verfahren gemäß der vorliegenden Erfindung bei zweidimensionalen Flächengebilden jedoch entsprechend auch mit entgegengesetzter Orientierung durchgeführt werden).

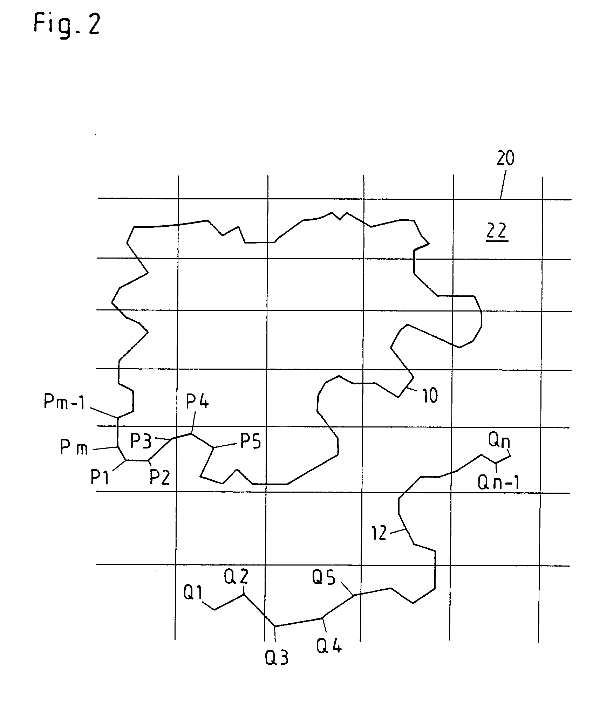

Die digitalen Kartendaten werden nun in einem ersten Verfahrensschritt mittels eines (virtuellen) Rasters 20 eingeteilt, das Rasterelemente 22 definierter Größe aufweist, so daß gemäß Figur 2 eine Fläche 10 mit vielen Eckpunkten P1, ..., Pm sowie eine Linie 12 ebenfalls mit vielen Eckpunkten Q1, ..., Qn im Raster 20 vor dem Generalisieren entsteht.

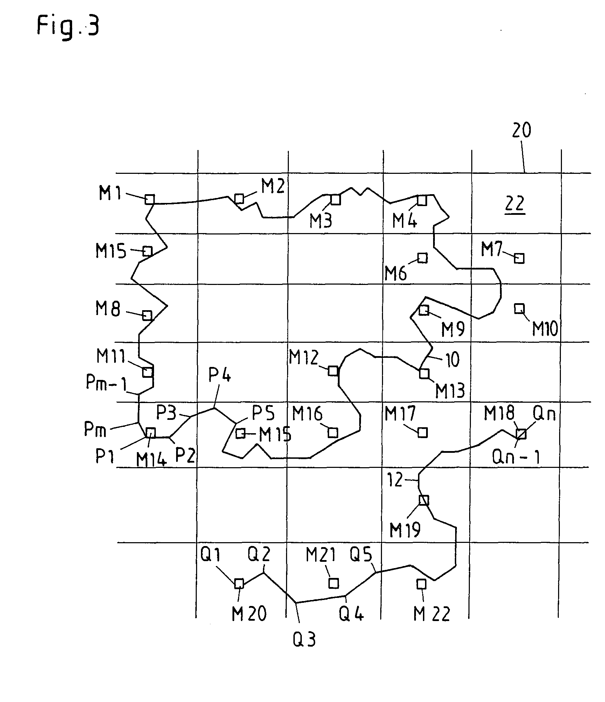

Jeder Eckpunkt P1, ..., Pm bzw. Q1, ..., Qn aller Kartendaten wird nun in einem zweiten Verfahrensschritt auf einen bestimmten Punkt Mi, nämlich auf den Mittelpunkt des dem jeweiligen Eckpunkt Pi bzw. Qi zugeordneten Rasterelements 22, das heißt der jeweiligen entsprechenden Rasterkachel projiziert bzw. verschoben; dies ist anhand Figur 3 veranschaulicht, in der in einem ersten Generalisierungsschritt die Eckpunkte P1, ..., Pm bzw. Q1, ..., Qn auf Rasterkachel-Mittelpunkte Mi projiziert bzw. verschoben sind.

In diesem Zusammenhang kann es auch vorkommen, daß mehrere aufeinanderfolgende Eckpunkte auf denselben bestimmten Punkt Mi, das heißt auf denselben Rasterkachel-Mittelpunkt des diesen mehreren aufeinanderfolgenden Eckpunkten zugeordneten Rasterelements 22 projiziert bzw. verschoben werden. In diesem Fall werden diese projizierten bzw. verschobenen Eckpunkte durch diesen bestimmten Punkt Mi, das heißt durch den Rasterkachel-Mittelpunkt ersetzt, wodurch die Anzahl der Eckpunkte der Fläche 10 bzw. der Linie 12 reduziert wird.

Wenn bei drei aufeinanderfolgenden Eckpunkten Pi-1, Pi, Pi+1 bzw. Qi-1, Qi, Qi+1 der zweite Eckpunkt Pi bzw. Qi auf der Verbindungslinie zwischen den benachbarten Eckpunkten, das heißt zwischen dem ersten Eckpunkt Pi-1 bzw. Qi-1 und dem dritten Eckpunkt Pi+1 bzw. Qi+1 liegt, so wird der zweite Eckpunkt Pi bzw. Qi entfernt (= dritter Verfahrensschritt); allgemeiner formuliert bedeutet dieser dritte Verfahrensschritt, daß ein betrachteter Eckpunkt Pi bzw. Qi gelöscht wird, wenn dieser Eckpunkt Pi bzw. Qi auf der Verbindungsgerade zwischen dem dem betrachteten Eckpunkt Pi bzw. Qi vorhergehenden Eckpunkt Pi-1 bzw. Qi-1 und dem dem betrachteten Eckpunkt Pi bzw. Qi nachfolgenden Eckpunkt Pi+1 bzw. Qi+1 liegt.

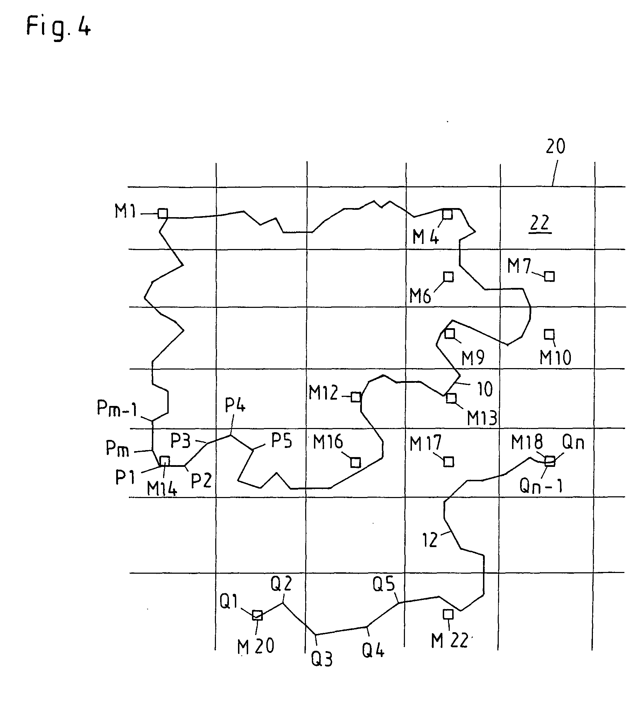

Hierdurch wird die Anzahl der Eckpunkte nochmals reduziert, was Figur 4 (= zweiter Generalisierungsschritt: Entfernen überflüssiger Eckpunkte) entnehmbar ist. In diesem Zusammenhang wird der betrachtete Eckpunkt Pi bzw. Qi aus der geordneten Liste der Eckpunkte P1, ..., Pm bzw. Q1, ..., Qn der digitalen Kartendaten gelöscht und der dem gelöschten Eckpunkt Pi bzw. Qi vorhergehende Eckpunkt Pi-1 bzw. Qi-1 mit dem dem gelöschten Eckpunkt Pi bzw. Qi nachfolgenden Eckpunkt Pi+1 bzw. Qi+1 verbunden.

Die vorbeschriebenen Verfahrensschritte, insbesondere der dritte Verfahrensschritt, können erforderlichenfalls für jeden Eckpunkt P1, ..., Pm des Kartengebildes 10 bzw. erforderlichenfalls für jeden Eckpunkt Q1, ..., Qn des Kartengebildes 12, und zwar insbesondere nach Löschen des betrachteten Eckpunkts Pi bzw. Qi
- für den dem gelöschten Eckpunkt Pi bzw. Qi vorhergehenden Eckpunkt Pi-1 bzw. Qi-1 und/oder
- für den dem gelöschten Eckpunkt Pi bzw. Qi nachfolgenden Eckpunkt Pi+1 bzw. Qi+1,
durchgeführt werden.

Im allgemeinen wird beim vorliegenden Ausführungsbeispiel eine iterative und/oder sukzessive Vorgehensweise praktiziert, das heißt der dritte Verfahrensschritt wird so oft iteriert, bis kein betrachteter Eckpunkt Pi bzw. Qi mehr auf der Verbindungsgerade zwischen dem dem betrachteten Eckpunkt Pi bzw. Qi vorhergehenden Eckpunkt Pi-1 bzw. Qi-1 und dem dem betrachteten Eckpunkt Pi bzw. Qi nachfolgenden Eckpunkt Pi+1 bzw. Qi+1 liegt.

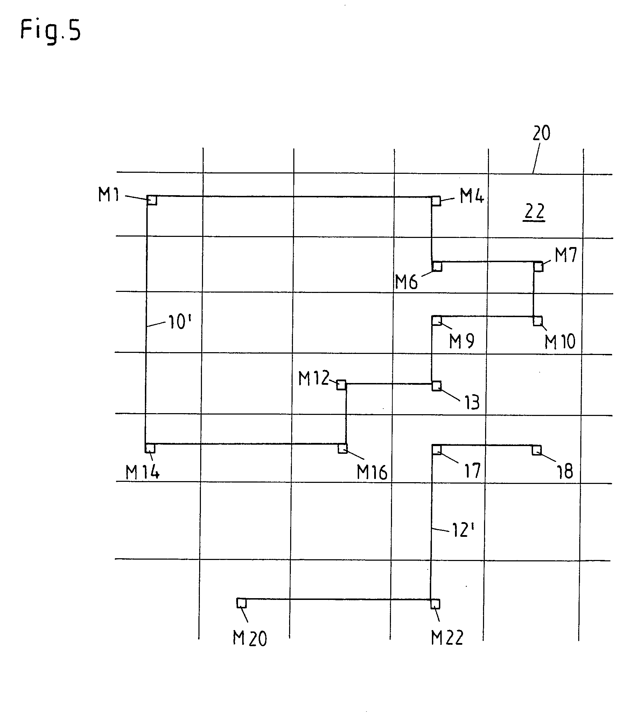

Wenn demnach der vorbeschriebene Generalisierungsvorgang nach diversen Iterationen abgeschlossen ist, werden die Fläche 10' nicht mehr durch ihre originalen Eckpunkte P1, ..., Pm bzw. die Strecke 12' nicht mehr durch ihre originalen Eckpunkte Q1, ..., Qn, sondern durch ihre am virtuellen Raster 20 projizierten bzw. verschobenen Eckpunkte M14, M16, M12, M13, M9, M10, M7, M6, M4, M1 (--> Fläche 10') bzw. M20, M22, M17, M18 (--> Strecke 12') beschrieben (vgl. Figur 5: Fläche 10' mit nur noch zehn Eckpunkten M14, M16, M12, M13, M9, M10, M7, M6, M4, M1 und Linie 12' mit nur noch vier Eckpunkten M20, M22, M17, M18 im Raster 20 nach dem Generalisieren).

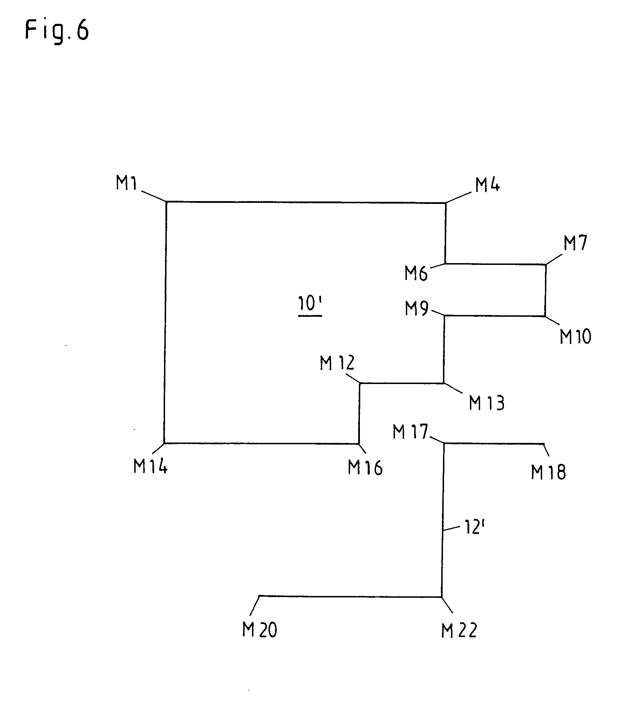

In diesem Zusammenhang ist anzumerken, daß das Raster 20 selbst niemals in den Daten vorhanden war, sondern nur virtuell zum Berechnen der generalisierten Eckpunkte M14, M16, M12, M13, M9, M10, M7, M6, M4, M1 (--> Fläche 10') bzw. M20, M22, M17, M18 (--> Strecke 12') erforderlich war; dementsprechend sind in Figur 6 die generalisierte Fläche 10' sowie die generalisierte Linie 12' nach dem Generalisieren auch wieder ohne Raster 20 dargestellt.

In bezug auf das Ausführungsbeispiel gemäß der vorliegenden Erfindung ist noch von Bedeutung, daß die digitalen Kartendaten für die unterschiedlichen Darstellungsmaßstäbe in den Fahrer-Informationssystemen in unterschiedlichen Leveln auf dem Datenträger, zum Beispiel auf der C[ompact]D[isc] oder auf der D[igital]V[ersatile]D[isc], gespeichert werden. Beim Aufbereiten der Daten für die unterschiedlichen Level bzw. Maßstäbe wird stets dasselbe Raster-Generalisierungsverfahren angewendet; lediglich die Breite des Rasters ist für die einzelnen Level unterschiedlich.

Hinsichtlich der Nachweisbarkeit des Verfahrens gemäß der vorliegenden Erfindung ist noch zu ergänzen, daß es den auf der Anzeigeeinrichtung oder dem Display des Navigationssystems dargestellten Flächen 10, 10' bzw. Strecken 12, 12' nicht anzusehen ist, aus wievielen Eckpunkten P1, ..., Pm diese Flächen 10, 10' bzw. aus wievielen Eckpunkten Q1, ..., Qn diese Strecken 12, 12' aufgebaut sind; hierzu müsste nicht die Darstellung auf dem Display, sondern die Daten auf dem Datenträger untersucht werden. Für diese Untersuchung müsste das Format bekannt sein, in dem die Daten abgelegt sind.

Wenn eine Fläche 10, 10' bzw. eine Linie 12, 12' in verschiedenen Maßstäben unterschiedlich detailliert dargestellt wird, so besagt dies nur, daß sie für die verschiedenen Maßstäbe unterschiedlich generalisiert wurde, jedoch nicht, wie generalisiert wurde.

## Patentansprüche

1. Insbesondere für mindestens eine Anzeigeeinrichtung eines einem Fortbewegungsmittel zugeordneten Informationssystems vorgesehenes Verfahren zum Ermitteln von insbesondere digitalen Kartendaten, durch die mittels einer Folge von Eckpunkten (P1, ..., Pm bzw. Q1, ..., Qn) mindestens ein zweidimensionales Kartengebilde (10 bzw. 12), wie etwa mindestens eine zweidimensionale Fläche (10) und/oder mindestens eine zweidimensionale Strecke (12), gebildet wird,
**gekennzeichnet durch**
zumindest folgende Verfahrensschritte:
[a] Einteilen der Kartendaten mittels mindestens eines virtuelle Rasterelemente (22) definierter Größe aufweisenden Rasters (20);
[b] Projizieren bzw. Verschieben eines jeden Eckpunkts (P1, ..., Pm bzw. Q1, ..., Qn) auf einen bestimmten Punkt (Mi), insbesondere auf den Mittelpunkt, des dem jeweiligen Eckpunkt (Pi bzw. Qi) zugeordneten Rasterelements (22);
[c] Löschen eines betrachteten Eckpunkts (Pi bzw. Qi), wenn dieser Eckpunkt (Pi bzw. Qi) auf der Verbindungsgerade zwischen dem dem betrachteten Eckpunkt (Pi bzw. Qi) vorhergehenden Eckpunkt (Pi-1 bzw. Qi-1) und dem dem betrachteten Eckpunkt (Pi bzw. Qi) nachfolgenden Eckpunkt (Pi+1 bzw. Qi+1) liegt.

2. Verfahren gemäß Anspruch 1, **dadurch gekennzeichnet, daß** vor dem Verfahrensschritt [c]
- mehrere aufeinanderfolgende Eckpunkte (P1, ..., Pm bzw. Q1, ..., Qn) auf denselben bestimmten Punkt (Mi), insbesondere auf denselben Mittelpunkt, des diesen mehreren aufeinanderfolgenden Eckpunkten (P1, ..., Pm bzw. Q1, ..., Qn) zugeordneten Rasterelements (22) projiziert bzw. verschoben und
- diese projizierten bzw. verschobenen Eckpunkte (P1, ..., Pm bzw. Q1, ..., Qn) durch diesen bestimmten Punkt (Mi), insbesondere durch diesen Mittelpunkt, ersetzt
werden.

3. Verfahren gemäß Anspruch 1 oder 2, **dadurch gekennzeichnet, daß** beim Verfahrensschritt [c] der betrachtete Eckpunkt (Pi bzw. Qi) aus mindestens einer geordneten Liste der Eckpunkte (P1, ..., Pm bzw. Q1, ..., Qn) der Kartendaten gelöscht wird.

4. Verfahren gemäß mindestens einem der Ansprüche 1 bis 3, **dadurch gekennzeichnet, daß** nach dem Verfahrensschritt [c] der dem gelöschten Eckpunkt (Pi bzw. Qi) vorhergehende Eckpunkt (Pi-1 bzw. Qi-1) mit dem dem gelöschten Eckpunkt (Pi bzw. Qi) nachfolgenden Eckpunkt (Pi+1 bzw. Qi+1) verbunden wird.

5. Verfahren gemäß mindestens einem der Ansprüche 1 bis 4, **dadurch gekennzeichnet, daß** der Verfahrensschritt [c] erforderlichenfalls für jeden Eckpunkt (P1, ..., Pm bzw. Q1, ..., Qn) des Kartengebildes (10 bzw. 12), insbesondere nach Löschen des betrachteten Eckpunkts (Pi bzw. Qi)
- für den dem gelöschten Eckpunkt (Pi bzw. Qi) vorhergehenden Eckpunkt (Pi-1 bzw. Qi-1) und/oder
- für den dem gelöschten Eckpunkt (Pi bzw. Qi) nachfolgenden Eckpunkt (Pi+1 bzw. Qi+1) durchgeführt wird.

6. Verfahren gemäß mindestens einem der Ansprüche 1 bis 5, **gekennzeichnet durch** eine iterative und/oder sukzessive Vorgehensweise, insbesondere **dadurch**, daß der Verfahrensschritt [c] so oft iteriert wird, bis kein betrachteter Eckpunkt (Pi bzw. Qi) mehr auf der Verbindungsgerade zwischen dem dem betrachteten Eckpunkt (Pi bzw. Qi) vorhergehenden Eckpunkt (Pi-1 bzw. Qi-1) und dem dem betrachteten Eckpunkt (Pi bzw. Qi) nachfolgenden Eckpunkt (Pi+1 bzw. Qi+1) liegt.

7. Verfahren gemäß mindestens einem der Ansprüche 1 bis 6, **dadurch gekennzeichnet, daß** die ermittelten Folgen von Eckpunkten in einem nachfolgendem Verfahrensschritt [d] als Unterfolgen in mindestens einer Kartenspeichereinheit abgespeichert werden.

8. Verfahren gemäß mindestens einem der Ansprüche 1 bis 7, **dadurch gekennzeichnet, daß**
- das Raster (20) als mindestens ein virtuelles Gitter und/oder
- das Rasterelement (22) als mindestens eine Kachel definierter Größe ausgebildet ist.

9. Einem Fortbewegungsmittel zugeordnetes Informationssystem, insbesondere Navigationssystem, arbeitend gemäß einem Verfahren gemäß mindestens einem der Ansprüche 1 bis 8.

10. Verwendung eines Verfahrens gemäß mindestens einem der Ansprüche 1 bis 8 und/oder mindestens eines einem Fortbewegungsmittel zugeordneten Informationssystems gemäß Anspruch 9 in mindestens einer Navigationseinrichtung.
